# FASCICULE DE BREVET EUROPEEN

(11) **EP 1 618 535 B1**
(45) Date de publication et mention de la délivrance du brevet: **27.07.2011**
(21) Numéro de dépôt: 04742504.6
(22) Date de dépôt: 14.04.2004
(51) Int. Cl.: G07C 9/00

(54) **PROCEDE DE CONTROLE D'ACCES SECURISE**
VERFAHREN ZUR SICHEREN ZUGANGSSTEUERUNG
SECURE ACCESS CONTROL METHOD

(30) Priorité: 28.04.2003 FR 0305153
(43) Date de publication de la demande: 25.01.2006
(73) Titulaire: MORPHO, 75015 Paris (FR)
(72) Inventeur: LAMBERT, Laurent, 95800 Cergy (FR); FONDEUR, Jean-Christophe, F-92300 Levallois-Perret (FR)
(74) Mandataire: Maillet, Alain
(86) Numéro de dépôt international: PCT/FR2004/000922
(87) Numéro de publication internationale: WO 2004/097750

(56) Documents cités:
- EP-A- 0 897 164
- EP-A- 1 160 721
- EP-A- 1 170 705
- WO-A-95/26013
- DE-A- 19 830 058
- US-A- 6 072 891
- US-A1- 2002 138 444

## Description

La présente invention concerne un procédé de contrôle d'accès sécurisé.

De nos jours, contrôler l'accès à un lieu protégé ou à un système informatique est primordial. Ce contrôle d'accès passe par la définition d'une liste de personnes autorisées. Une fois les paramètres d'accès enregistrés, le système de contrôle d'accès n'autorise l'accès qu'en fonction d'informations reçues conformes aux conditions d'accès établies préalablement. Ce procédé de contrôle d'accès comporte généralement une phase d'identification et une phase de vérification. Ce procédé est appelé par la suite, procédé d'identification consolidée.

Un procédé d'identification consolidée peut, par exemple être, réalisé à l'aide de moyens biométriques. C'est le cas par exemple, des procédés d'identification consolidée consistant d'une part, à identifier par une prise d'empreinte digitale la personne demandant l'accès et, d'autre part, à vérifier le caractère vivant du doigt porteur de cette empreinte digitale. Un système de ce type se présente par exemple sous la forme de capteurs d'empreinte digitale comportant des moyens optiques prévus pour réaliser une image d'une empreinte et des moyens électriques prévus pour réaliser des mesures électriques du doigt porteur de cette empreinte. A l'aide d'un dispositif de traitement rattaché au capteur, l'image de l'empreinte est comparée à une banque d'images afin d'identifier la personne détentrice du doigt correspondant et les mesures électriques sont comparées entre elles ou avec d'autres caractéristiques extraites de l'image de l'empreinte du doigt afin de vérifier si ce doigt est vivant.

La demande internationale WO 95/26013 décrit un tel procédé d'identification consolidée qui consiste à autoriser l'accès d'une personne lorsqu'elle a été identifiée par une prise de mesure d'identification et que cette identification a été validée par une ou plusieurs autres prises de mesure et à refuser l'accès dans le cas contraire.

Par ces procédés d'identification consolidée à deux phases, les tentatives de fraudes sont limitées. Néanmoins, on a constaté que le nombre des tentatives réduisait la fiabilité du système, un fraudeur qui a réussi à être identifié comme une personne autorisée, pouvant par exemple faire valider cette identification et ainsi détourner le système au bout de quelques dizaines de tentatives.

Le but de l'invention est donc d'améliorer la sécurité des procédés d'identification consolidée en évitant que de nombreuses tentatives permettent de le déjouer.

Il est connu une solution pour sécuriser les transactions bancaires qui peuvent s'apparenter à l'identification consolidée de personne. Par exemple, la demande de brevet américain US2002138444 décrit un système dans lequel, après avoir introduit une carte bancaire dans un terminal, on réalise une vérification dans une liste des cartes bloquées et si la carte n'est pas bloquée, l'utilisateur doit introduire son code PIN. Si le code n'est pas correct, le numéro d'identification de la carte est enregistré dans la liste des cartes bloquées.

Le problème rencontré par ce système est qu'une fois une carte bloquée l'utilisateur ne peut plus utiliser sa carte, rendant le système certes sécuritaire mais peu flexible.

Le but de la présente invention est donc d'améliorer la sécurité des procédés d'identification consolidée en évitant que de nombreuses tentatives permettent de le déjouer tout permettant qu'une personne, dont une caractéristique a été identifiée puis validée, mais qui est présente dans la liste de révocation, ne fasse pas l'objet d'un rejet systématique.

A cet effet, la présente invention concerne un procédé d'identification consolidée d'une personne suivant l'objet de la revendication indépendante 1.

Selon une autre caractéristique de l'invention, un moyen d'identification est choisi parmi les moyens de reconnaissance d'empreinte digitale, d'iris, de voix, ou un code secret et en ce qu'un moyen de mesure est choisi parmi les moyens de mesure d'impédance, d'inductance, de pression sanguine ou de température.

Selon une autre caractéristique de l'invention, ledit procédé consiste à comparer les résultats de mesure obtenus par ledit ou chaque moyen d'identification à des données préétablies et à identifier une personne lorsque les résultats de mesure correspondent à des données préétablies pour ladite personne.

Selon une autre caractéristique de l'invention, ledit procédé consiste à valider une identification d'une personne lorsque les résultats de mesure obtenus par ledit ou chaque moyen de mesure correspondent à des critères d'acceptabilité.

Selon une autre caractéristique de l'invention, ladite caractéristique enregistrée dans ladite liste de révocation est au moins le résultat d'une prise de mesure permettant une identification ou une information déduite dudit résultat.

Selon une autre caractéristique de l'invention, ladite information est l'identité de la personne identifiée.

Les caractéristiques de l'invention mentionnée ci-dessus, ainsi que d'autres apparaîtront plus clairement à la lecture de la description suivante d'un exemple de réalisation, ladite description étant faite en relation avec les dessins joints, parmi lesquels :
la Fig. 1 représente un organigramme des étapes du procédé d'identification consolidée selon un premier mode de réalisation de l'invention.
la Fig. 2 représente un organigramme des étapes du procédé d'identification consolidée selon un second mode de réalisation de l'invention.
La Fig. 3 représente un organigramme des étapes du procédé d'identification consolidée selon un troisième mode de réalisation de l'invention.

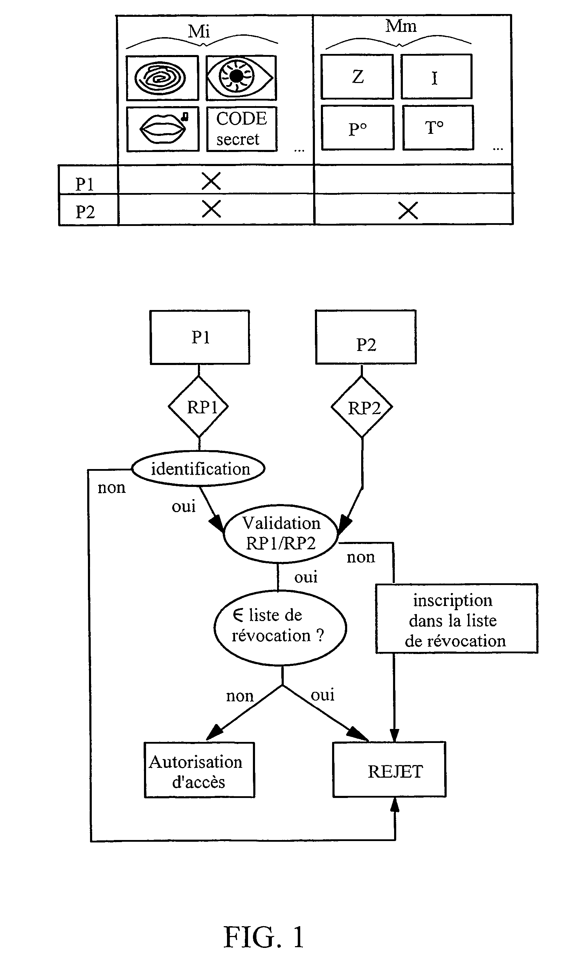

Le procédé selon l'invention est un procédé de contrôle d'accès basé sur le principe d'un procédé d'identification consolidée. Le procédé d'identification consolidée illustré à la Fig. 1 comprend un ensemble de moyens de prise de mesure regroupant des moyens d'identification Mi prévus pour identifier une personne demandant un accès à un système, ainsi que des moyens de mesure Mm prévus pour effectuer des mesures sur cette personne demandant l'accès afin de la caractériser.

Un moyen d'identification Mi est par exemple un capteur d'empreinte digitale, un capteur d'empreinte d'iris, un capteur de voix ou un dispositif d'entrée d'un code secret, etc. Un moyen de mesure Mm est par exemple un capteur effectuant des mesures d'impédance Z, d'inductance I, de pression sanguine P°, de température T° ou de toute autre caractéristique liée à la personne demandant l'accès.

Dans le procédé selon un premier mode de réalisation de l'invention, la première étape consiste à réaliser au moins deux prises de mesure P1 et P2. L'une des prises de mesure, par exemple P1, est nécessairement une prise de mesure réalisée à l'aide d'un moyen d'identification Mi, alors que l'autre prise de mesure P2 et les autres prises de mesure s'il en existe d'autres sont réalisées chacune à l'aide d'un moyen choisi parmi l'ensemble des moyens d'identification Mi et l'ensemble des moyens de mesure Mm proposés précédemment. Ainsi, on peut réaliser en P1 une prise d'empreinte digitale et en P2 une prise d'empreinte d'iris ou, en P1 une prise d'empreinte digitale et en P2 une prise de mesure optique, etc.

On peut aussi effectuer en P1 une prise d'empreinte digitale du pouce de la main droite couplée en P2 à des mesures d'impédance de ce pouce.

On notera que les prises de mesure P1 et P2 peuvent être réalisées aussi bien de manière successive que de manière approximativement simultanée. Dans le cas de deux prises de mesure successives, ces prises sont liées entre elles par une logique de relation d'ordre et/ou de relation temporelle. Ainsi, par exemple, lorsqu'un groupe de personnes autorisées effectue en deux étapes successives les deux prises de mesure P1 et P2, chaque personne est reconnue à la seconde prise de mesure P2 comme étant la personne déjà reconnue à la première prise P1.

Chaque prise P1, P2 donne un résultat RP1, RP2. Le résultat RP1 obtenu par la prise de mesure P1 destinée à identifier la personne demandant l'accès est soumis à une étape dite d'identification. Cette étape consiste à vérifier que le résultat RP1 correspond à une personne autorisée. Si, à l'issue de l'étape d'identification, la réponse est négative, autrement dit si la personne demandant l'accès n'a pas été reconnue comme une personne autorisée, alors l'accès de cette personne est immédiatement rejeté. Si, dans le cas contraire, la personne demandant l'accès a été reconnue comme une personne autorisée, les résultats RP1 et RP2 des deux prises de mesures P1 et P2 sont soumis à une étape de validation. Cette étape consiste à vérifier qu'il existe une cohérence entre les résultats des prises RP1 et RP2. Par cohérence, on entend de manière générale l'établissement d'une relation attendue entre les résultats des prises RP1 et RP2.

Dans un mode de réalisation illustratif, le résultat RP1 est considéré comme bon, s'il y a identification, c'est-à-dire si le système reconnaît que l'empreinte digitale du pouce droit de la personne demandant l'accès correspond à une empreinte d'une personne autorisée. Le résultat RP2 est considéré comme bon, si les valeurs d'impédance mesurées sur le pouce droit correspondent à des valeurs considérées comme appartenant à une personne vivante. Enfin, la cohérence des résultats RP1 et RP2 entre eux est vérifiée et considérée comme bonne, si le pouce porteur de l'empreinte digitale reconnue, présente des valeurs d'impédance mesurées considérées comme appartenant à une personne vivante ou à des valeurs préenregistrées considérées comme propres à la personne identifiée.

Si les conditions d'identification et de cohérence ne sont pas validées, alors l'accès est refusé à la personne le demandant. Par exemple, ce rejet peut faire en outre l'objet d'une inscription dans une liste dite de révocation, d'au moins une caractéristique identifiée lors de la prise de mesure P1. Cette ou ces caractéristiques peuvent être un résultat de prise de mesure ou une information déduite d'un résultat d'une prise de mesure. Ainsi, parmi les caractéristiques pouvant être inscrites dans la liste, on peut trouver par exemple l'identité de la personne reconnue, une empreinte digitale, un code secret, etc. Cette ou ces caractéristiques peuvent être celles des victimes de fraudeurs comme celles des fraudeurs. Cette ou ces caractéristiques doivent permettre de reconnaître plus aisément un fraudeur lors d'une nouvelle tentative de celui-ci.

Par contre, si les conditions d'identification et de cohérence sont validées, alors on vérifie qu'au moins une des caractéristiques issues des prises de mesure et susceptibles d'être dans la liste de révocation ne se retrouve pas dans cette liste de révocation. Si, aucune caractéristique issue des prises de mesure et susceptible d'être dans la liste de révocation n'est pas présente dans la liste de révocation, alors l'accès est autorisé. Si, dans le cas contraire, au moins une caractéristique issue des prises de mesure est présente dans la liste de révocation, alors l'accès peut être refusé à la personne le demandant.

Par exemple, si l'empreinte du pouce droit prise lors de la prise de mesure P1 validée par une prise de mesure P2, se trouve après consultation de la liste de révocation, déjà enregistrée dans cette liste, la personne demandant l'accès avec cette empreinte peut être immédiatement rejetée.

Une fois la liste de révocation constituée, toute personne se présentant aux prises de mesure P1 et P2 avec au moins une des caractéristiques inscrites dans la liste de révocation, cette personne pouvant être aussi bien la personne détentrice de cette H identité qu'un fraudeur, pourra se voir refuser l'accès. L'accès peut être ainsi rendu très difficile à des fraudeurs qui effectueraient plusieurs tentatives.

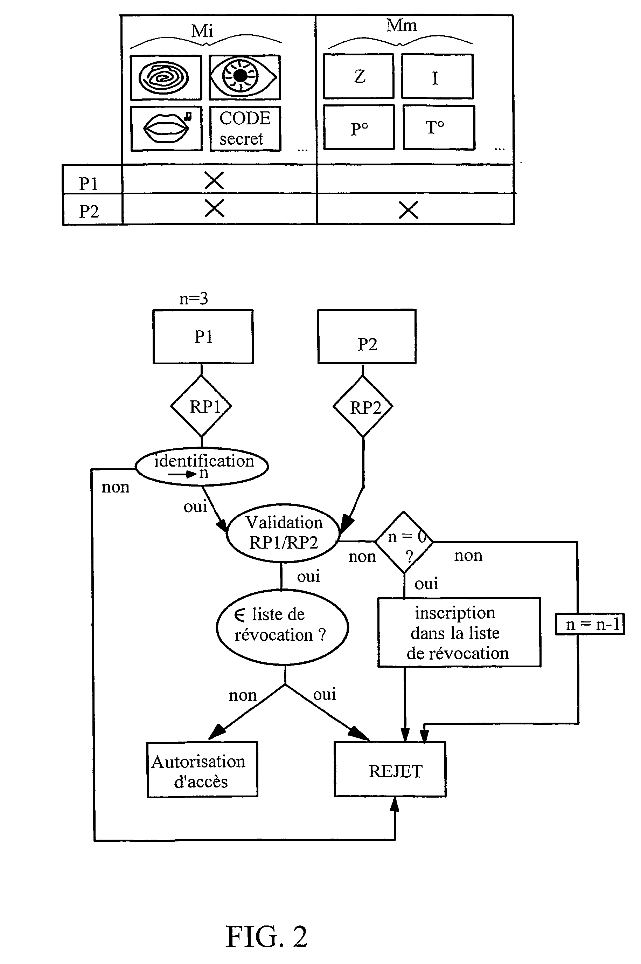

Dans un exemple de réalisation illustré à la Fig. 2, un nombre prédéfini de tentatives d'accès n est instauré. Ce nombre prédéfini est par exemple égal à trois. Dans cet exemple de réalisation, les étapes précédant l'étape de validation ainsi que les étapes suivant l'acceptation de la validation sont identiques à celles décrites pour le premier mode de réalisation. En revanche, dans cet exemple de réalisation en cas d'absence de validation, on vérifie que le nombre de tentatives n est différent d'une valeur nulle. Si c'est le cas, on décrémente le nombre de tentatives n d'une unité et on rejette l'accès à la personne demandant cet accès. Si ce n'est pas le cas, c'est-à-dire si ce nombre n est égal à une valeur nulle, alors on inscrit à l'instar du premier mode de réalisation au moins une caractéristique issue des prises de mesures P1 et P2 dans une liste de révocation, puis on rejette l'accès à la personne le demandant. En outre, à chaque nouvelle tentative d'accès, après identification de la personne, le nombre de tentatives n associé à ladite personne est obtenu par relation avec cette identification et est mémorisé pour ensuite être pris en compte en cas d'absence de validation.

Dans cet exemple de réalisation, les tentatives d'accès sont comptabilisées et l'absence de validation sanctionnée au bout du nombre de tentatives prédéfini par une inscription dans la liste de révocation.

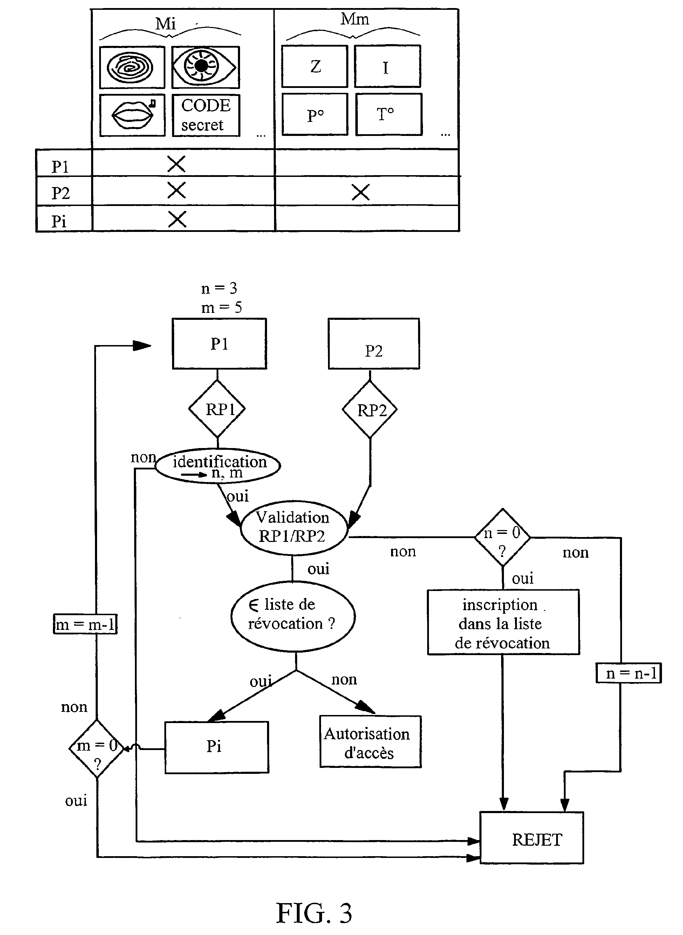

Un autre mode de réalisation de l'invention est également proposé. Dans ce mode de réalisation illustré à la Fig. 3, une caractéristique identifiée puis validée, mais présente dans la liste de révocation, ne fait pas l'objet d'un rejet systématique.

En effet, la présence de cette caractéristique dans la liste de révocation est suivie, dans ce mode de réalisation de l'invention, par une nouvelle prise de mesure Pi par un moyen d'identification Mi, différente de la première prise de mesure P1. Cette autre prise de mesure Pi remplace la première prise de mesure P1 obtenue par un moyen d'identification. Le procédé recommence au début et les différentes étapes du procédé prennent en compte les résultats obtenus par les prises de mesures Pi et P2.

Dans l'exemple illustratif choisi, si l'empreinte du pouce droit est présente dans la liste de révocation, la personne demandant l'accès pourra effectuer une nouvelle prise de mesure, soit avec un moyen d'identification Mi identique, mais par exemple avec l'index, soit avec un moyen d'identification Mi différent, par exemple avec l'empreinte de l'iris de son oeil droit, etc.

On notera que le choix du nouveau moyen d'identification Mi peut, soit être laissé à la personne demandant l'accès, soit être proposé par le système mettant en oeuvre le procédé.

Dans l'exemple illustratif choisi, la présence dans la liste de révocation de l'empreinte de pouce identifiée lors de la prise de mesure P1 peut faire l'objet d'une autre prise de mesure par un moyen d'identification Mi comme par exemple une prise d'empreinte d'iris. L'empreinte de l'iris remplace alors l'empreinte du pouce dans le procédé.

Afin de limiter le nombre de tentatives d'identification, un nombre de tentatives d'identification m est prédéterminé. De cette manière, après chaque changement de moyen d'identification, on vérifie que le nombre de tentatives d'identification m est différent d'une valeur nulle. Si ce nombre m est différent d'une valeur nulle alors on décrémente d'une unité ce nombre m et on recommence le procédé, sinon l'accès est rejeté.

De même, à l'instar de l'exemple de réalisation précédent, l'étape de validation est suivie d'une vérification d'un nombre n de tentatives prédéterminées aboutissant soit sur un rejet immédiat dans le cas ou n est différent de zéro, soit à une inscription dans la liste de révocation et un rejet dans le cas contraire.

On notera que les valeurs de m et n sont connues à l'étape d'identification du fait de la correspondance faite entre l'identité de la personne et le nombre n ou m.

Pour chacun des modes de réalisation exposés, la personne reconnue au travers de la caractéristique rejetée doit alors ensuite être ré-autorisée de manière contrôlée pour être à nouveau considérée et reconnue par le système comme une personne autorisée d'accès. Cette ré-autorisation peut s'obtenir par deux méthodes. La première méthode consiste à effacer de la liste de révocation les caractéristiques liées à ladite personne, puis à les revalider de manière à ce qu'elles soient à nouveau reconnues comme appartenant à une personne autorisée. La seconde méthode consiste d'une part, à supprimer définitivement l'autorisation auxdites caractéristiques inscrites dans la liste de révocation et, d'autre part, à autoriser d'autres caractéristiques liées à ladite personne non inscrites dans la liste de révocation.

On notera que les informations contenues dans ladite liste de révocation peuvent être centralisées dans un fichier informatique consultable à distance par le système chargé de communiquer avec ladite liste.

## Revendications

1. Procédé d'identification consolidée d'une personne consistant à autoriser l'accès à cette personne suite à l'exécution avec succès de l'ensemble d'étapes suivant :
- une étape d'une première prise de mesure, appelée mesure d'identification de ladite personne, réalisée par un moyen d'identification (Mi),
- une étape de prise d'au moins une autre mesure par au moins un autre moyen de mesure (Mm),
- une étape d'identification de la personne soumise à la prise de mesure d'identification,
- une étape de refus d'accès dans le cas où la personne n'est pas identifiée, sinon
- une étape de validation d'accès de ladite personne lorsqu'elle a été identifiée par ladite prise de mesure d'identification et que les résultats de ladite identification et ceux de ladite ou desdites autres prises de mesure sont cohérents, et
- une étape de refus d'accès en cas d'accès non validé lors de l'étape de validation,
**caractérisé en ce que**
- en cas d'accès validé, l'ensemble des étapes comporte de plus une étape de vérification qu'au moins une caractéristique de ladite personne issue desdites prises de mesures n'appartient pas à une liste de révocation, et **en ce que**
- si aucune caractéristique de ladite personne n'appartient à la liste de révocation, l'accès est autorisé à cette personne,
- si au moins une caractéristique de ladite personne appartient à ladite liste de révocation, l'ensemble des étapes est à nouveau exécuté en remplaçant le moyen d'identification (Mi) de l'étape de première prise de mesure par un moyen d'identification différent de celui utilisé lors de la précédente exécution de cette étape de première prise de mesure, et l'accès est autorisé à cette personne si cette nouvelle exécution dudit ensemble d'étapes se solde par un succès, et s'il existe une incohérence entre deux prises de mesures après un nombre prédéfini de tentatives d'accès sans succès, au moins une caractéristique de ladite personne est inscrite dans la liste de révocation, et l'accès est refusé à cette personne.

2. Procédé selon la revendication 1, **caractérisé en ce que** ladite ou chaque autre prise de mesure est réalisée soit par un moyen d'identifcation (Mi) soit par un moyen de mesure (Mm).

3. Procédé selon l'une des revendications précédentes, **caractérisé en ce qu'**un moyen d'identification (Mi) est choisi parmi les moyens de reconnaissance d'empreinte digitale, d'iris, de voix, ou un code secret et **en ce qu'**un moyen de mesure (Mm) est choisi parmi les moyens de mesure d'impédance (Z), d'inductance (I), de pression sanguine (P°) ou de température (T°).

4. Procédé selon l'une des revendications précédentes, **caractérisé en ce que** ladite étape d'identification consiste à comparer les résultats de mesure (RP1, RP2) obtenus par ledit ou chaque moyen d'identification (Mi) à des données préétablies et à identifier une personne lorsque les résultats de mesure (RP1, RP2) correspondent à des données préétablies pour ladite personne.

5. Procédé selon une des revendications précédentes, **caractérisé en ce que** l'étape de validation consiste à comparer les résultats de mesure (RP1, RP2) obtenus par ledit ou chaque moyen de mesure (Mm) à des valeurs prédéterminées correspondent à des critères d'acceptabilité.

6. Procédé selon une des revendications précédentes, **caractérisé en ce que** ladite caractéristique enregistrée dans ladite liste de révocation est au moins le résultat d'une prise de mesure permettant une identification ou une information déduite de ce résultat.

7. Procédé selon la revendication 6, **caractérisé en ce que** ladite information est l'identité de la personne identifiée.

## Claims

1. A consolidated identification method for a person consisting in authorizing access for the person following the successful execution of all the following steps:
- taking a first measurement, said identification measurement of said person, from an identification mean (Mi),
- taking at least one other measurement from at least one other measurement mean (Mn),
- identifying the person subjected to the identification measurement,
- refusing access when the person is not identified, otherwise
- validating the access of the person when the person has been identified from said identification measurement and when the results of said identification and the results of said at least one other measurements are consistent, and
- refusing access when the access has not be validated,
wherein
- when the access is validated, the set of steps further comprises verifying if at least one characteristic of the person issuing from the measuring steps belongs to a revocation list, and
- when none of characteristics of the person belongs to the revocation list, the access of the person is authorized,
- when at least one characteristic of the person belongs to said revocation list, the set of steps is executing again by replacing the identification mean (Mi) used along the step of taking the first measurement by an identification mean which is different of the identification mean used along the previous execution of this step of taking the first measurement, and the access of the person is authorized when this new execution of said set of steps concludes successfully, and if an inconsistency exists between two measurements after a predefined number of unsuccessful access attempts, entering at least one characteristics of the person in the revocation list, and the access of the person is refused.

2. A method according to claim 1, wherein each other measurement step is performed either by an identification means (Mi) or by a measuring means (Mm).

3. A method according to any one of the preceding claims, wherein an identification means (Mi) is selected from recognizing means of fingerprint, iris, voice, or secret code, and wherein a measurement means (Mm) is selected from means for measuring impedance (Z), inductance (I), blood pressure (P°) or temperature (T°).

4. A method according to any one of the preceding claims, wherein the identification step further comprises comparing the measurement results (RP1, RP2) obtained by the identification means (Mi) with pre-established data and identifying the person when the measurement results (RP1,RP2) correspond to the pre-established data for the person.

5. A method according to any one of the preceding claims, wherein the validation step further comprises comparing the measurement results (Rp1, RP2) obtained by each measuring means (Mm) with pre-determined values corresponding to acceptable criteria.

6. A method according to any one of the preceding claims, wherein the characteristic recorded in the revocation list is at least the result of a measurement permitting identification or information derived from the result.

7. A method according to claim 6, wherein the information is the identity of the person identified.

## Patentansprüche

1. Verfahren zur verstärkten Identifikation einer Person, das daraus besteht, einer Person einen Zugriff zu gewähren, falls die Gesamtheit der folgenden Schritte erfolgreich durchgeführt wird:
- einen Schritt einer als Identifikationsmessung der Person bezeichneten ersten Messung mittels eines Identifikationsmittels (Mi),
- einen Schritt des Durchführens wenigstens einer weiteren Messung mittels wenigstens eines weiteren Messmittels (Mm),
- einen Schritt der Identifikation der Person, an der die Identifikationsmessung durchgeführt wurde,
- einen Schritt der Verweigerung des Zugriffs, falls die Person nicht identifiziert wird, ansonsten
- einen Schritt der Freigabe des Zugriffs für die Person, falls diese durch die Identifikationsmessung identifiziert wurde und falls die Resultate der Identifikation und der weiteren durchgeführten Messung / Messungen stimmig sind, und
- einen Schritt des Verweigerns des Zugriffs, falls beim Schritt der Freigabe der Zugriff nicht gewährt wurde,
**dadurch gekennzeichnet, dass**
- im Fall eines gewährten Zugriffs die Gesamtheit der Schritte weiterhin einen Schritt der Überprüfung umfasst, ob wenigstens ein Merkmal der Person, das sich durch die Messungen ergibt, sich nicht auf einer Widerrufsliste befindet, und **dadurch**, dass
- falls sich kein Merkmal der Person auf der Widerrufsliste befindet, dieser Person der Zugriff gewährt wird,
- falls sich wenigstens ein Merkmal der Person auf der Widerrufsliste befindet, die Gesamtheit der Schritte erneut durchgeführt wird, wobei das Identifikationsmittel (Mi) des Schrittes der ersten Messung durch ein Identifikationsmittel ersetzt wird, das sich von dem beim ersten Durchlaufen dieses Schrittes der ersten Messung verwendeten unterscheidet, und der Zugriff dieser Person gewährt wird, falls die erneute Durchführung der Gesamtheit der Schritte erfolgreich verläuft, und wenigstens ein Merkmal der Person in die Widerrufsliste eingetragen wird und dieser Person der Zugriff verweigert wird, falls nach dem Durchführen einer vorbestimmten Anzahl von erfolglosen Zugriffsversuchen zwischen zwei Messungen eine Unstimmigkeit besteht.

2. Verfahren nach Anspruch 1,
**dadurch gekennzeichnet, dass**
die weitere / weiteren Messung / Messungen entweder durch ein Identifikationsmittel (Mi) oder durch ein Messmittel (Mm) durchgeführt wird.

3. Verfahren nach einem der vorhergehenden Ansprüche,
**dadurch gekennzeichnet, dass**
ein Identifikationsmittel (Mi) aus der Gruppe der Erkennungsmittel Fingerabdruck, Iris, Stimme oder Geheimcode ausgewählt wird und dass ein Messmittel (Mm) aus der Gruppe der Messmittel Impedanz (Z), Induktivität (I), Blutdruck (P°) oder Temperatur (T°) ausgewählt wird.

4. Verfahren nach einem der vorhergehenden Ansprüche,
**dadurch gekennzeichnet, dass**
der Schritt der Identifikation aus einem Vergleich der Messergebnisse (RP1, RP2), die man durch das/die Messmittel (Mi) erhält, mit vorher festgelegten Daten und einer Identifikation einer Person besteht, falls die Messergebnisse (RP1, RP2) mit den vorher festgelegten Daten für die Person übereinstimmen.

5. Verfahren nach einem der vorhergehenden Ansprüche,
**dadurch gekennzeichnet, dass**
der Schritt der Freigabe aus einem Vergleich der Messergebnisse (RP1, RP2) die man durch das/die Messmittel (Mm) erhält, mit vorher festgelegten Werten besteht, die Akzeptabilitätskriterien entsprechen.

6. Verfahren nach einem der vorhergehenden Ansprüche,
**dadurch gekennzeichnet, dass**
es sich bei dem in der Widerrufsliste eingetragenen Merkmal wenigstens um das Ergebnis einer Messung, die eine Identifikation ermöglicht, oder um eine aus diesem Resultat abgeleitete Information handelt.

7. Verfahren gemäß Anspruch 6,
**dadurch gekennzeichnet, dass**
es sich bei der Information um die Identität der identifizierten Person handelt.
